# EUROPEAN PATENT APPLICATION

(11) **EP 4 566 828 A1**
(43) Date of publication of application: **11.06.2025**
(21) Application number: 23849727.5
(22) Date of filing: 22.05.2023
(51) Int. Cl.: B41J 29/38, B41J 29/42, G06F 3/048

(54) **PRINTER SYSTEM AND CONTROL METHOD FOR PRINTER SYSTEM**

(30) Priority: 04.08.2022 JP 2022125128
(71) Applicant: Hitachi Industrial Equipment Systems Co., Ltd., Tokyo 101-0021 (JP)
(72) Inventor: AONO, Masahiro, Tokyo 100-8280 (JP); OKAWA, Keisuke, Tokyo 101-0021 (JP); KURIHARA, Hiroko, Tokyo 101-0021 (JP)
(74) Representative: MERH-IP Matias Erny Reichl Hoffmann Patentanwälte PartG mbB
(86) International application number: PCT/JP2023/018961
(87) International publication number: WO 2024/029164

(57) **Abstract**

A printer system includes a plurality of printers provided with a print mechanism part control software that controls a printing operation unit by a GUI displayed on a display operation unit, and the plurality of printers are connected to a network. One printer among the plurality of printers is an operating-side printer that operates the other printers. The operating-side printer is provided with a GUI file for a host device, and control software that gives a command to the print mechanism part control software, a GUI file and control software for operating an operated-side printer are constructed, and the operated-side printer is operated on the basis of the constructed GUI file and the control software of the operated-side printer.

## Description

### TECHNICAL FIELD

The present invention relates to a printer system and a control method for a printer system.

### BACKGROUND ART

An industrial printer (for example, an inkjet printer) is used as a printer that prints a product name, a manufacturing date, an expiration date, and the like on a manufactured product and the like (an object to be printed). In general, an operator of the industrial printer inputs information or data such as print contents to a control unit from a display operation unit (for example, a touch panel) attached to a main body, and then operates the printer to perform a printing operation while referring to images displayed on a screen of the display operation unit and giving an instruction for an image for performing a desired operation through an operation with a finger or the like. That is, the operator inputs an operation command to the printer through a so-called graphical user interface (GUI), and the printer executes a printing operation according to the operation command. When a plurality of production lines are installed, a plurality of printers are installed in many cases, and a plurality of operators are required to operate the printers.

By the way, although not related to a printer, WO2013/014874 (Patent Document 1) introduces a technology that specifies a plurality of devices and draws (displays on a screen) a GUI corresponding to the devices in order to facilitate a linked operation of the plurality of devices. That is, Patent Document 1 describes a "configuration including a device information management unit that acquires device information that specifies first and second devices connected to a network, a device linkage service information management unit that acquires linkage information that specifies a linked operation realized by a first function provided in the first device and a second function provided in the second device, and a GUI generation and drawing unit that associates and draws first and second GUI parts that indicate the first and second devices specified by the device information, and a third GUI part that indicates the linked operation specified by the linkage information".

### CITATION LIST

### PATENT DOCUMENT

Patent Document 1: WO2013/014874

### SUMMARY OF THE INVENTION

### PROBLEMS TO BE SOLVED BY THE INVENTION

As described above, when a plurality of printers are installed on a production line, many people are required to operate the plurality of printers at the same time. However, this is not easy. Therefore, when a plurality of printers are installed, there is a demand for one operator to be able to operate the other printers from one of the printers. If it is possible to operate the plurality of printers from one printer, since one operator can perform an operation (printing operation with the printers) without moving to installation positions of the other printers, it is possible to operate the printers efficiently with a small number of people.

Here, an object of the invention is to provide a printer system and a control method for a printer system which makes it easy to operate other printers from one printer in a printer system including a plurality of printers.

### SOLUTIONS TO PROBLEMS

To accomplish the object, according to an aspect of the invention, there is provided a printer system including a plurality of printers provided with a print mechanism part control software that controls a printing operation unit by a GUI displayed on a display operation unit, the plurality of printers being connected to a network. At least one printer among the plurality of printers is an operating-side printer that operates the other printers. The operating-side printer is provided with a GUI file for a host device, and control software that gives a command to the print mechanism part control software. The operating-side printer constructs a GUI file and control software for operating an operated-side printer. The operated-side printer is operated on the basis of the constructed GUI file and control software of the operated-side printer.

In addition, according to another aspect of the invention, there is provided a control method for a printer system including a plurality of printers provided with a print mechanism part control software that controls a printing operation unit by a GUI displayed on a display operation unit, the plurality of printers being connected to a network. An operating-side printer that operates another printer is provided with a GUI file for a host device, and control software that gives a command to the print mechanism part control software. A GUI file and control software for operating an operated-side printer are constructed. The operated-side printer is operated on the basis of the constructed GUI file and control software of the operated-side printer.

### EFFECTS OF THE INVENTION

According to the invention, in a print system including a plurality of printers, it is possible to provide a printer system and a control method for a printer system which are capable of simply operating other printers from one printer.

### BRIEF DESCRIPTION OF THE DRAWINGS

Fig. 1 is a view illustrating an external appearance of a printer system in Example 1 of the invention.
Fig. 2 is a view illustrating a printing operation of an inkjet printer.
Fig. 3 is a view illustrating a configuration of the printer system in Example 1 of the invention.
Fig. 4 is a view illustrating an example of an initial screen of a GUI when operating other printers.
Fig. 5 is a view illustrating a configuration of a printer system in Example 2 of the invention.
Fig. 6 is a view illustrating a configuration of a printer system in Example 3.
Fig. 7 is a view illustrating a configuration of a printer system in Example 4.
Fig. 8 is a view illustrating a flow of connected device confirmation in Example 4.
Fig. 9 is a view illustrating a configuration of a printer system in Example 5 of the invention.
Fig. 10 is a view illustrating a configuration of a printer system in Example 6.

### MODE FOR CARRYING OUT THE INVENTION

Hereinafter, examples of the invention will be described in detail with reference to the accompanying drawings. Note that, the invention should not be construed as being limited to description of the following examples. That is, it is easily understood by those skilled in the art that the configuration can be changed without departing from the technical idea or gist of the invention. For example, the invention can be realized not only in a printer system using an inkjet printer, but also in a printer system using other printers.

In addition, in configurations of the following examples, the same reference numeral will be given to portions having the same or similar function, and redundant description will be omitted.

In addition, in order to facilitate understanding of the invention, a position, a size, a shape, a range, and the like of respective configurations shown in the drawings do not represent a position, a size, a shape, a range, and the like of device configurations in an actual product. Therefore, the invention is not limited to the position, the size, the shape, the range, and the like of the device components disclosed in the drawings.

### <Example 1>

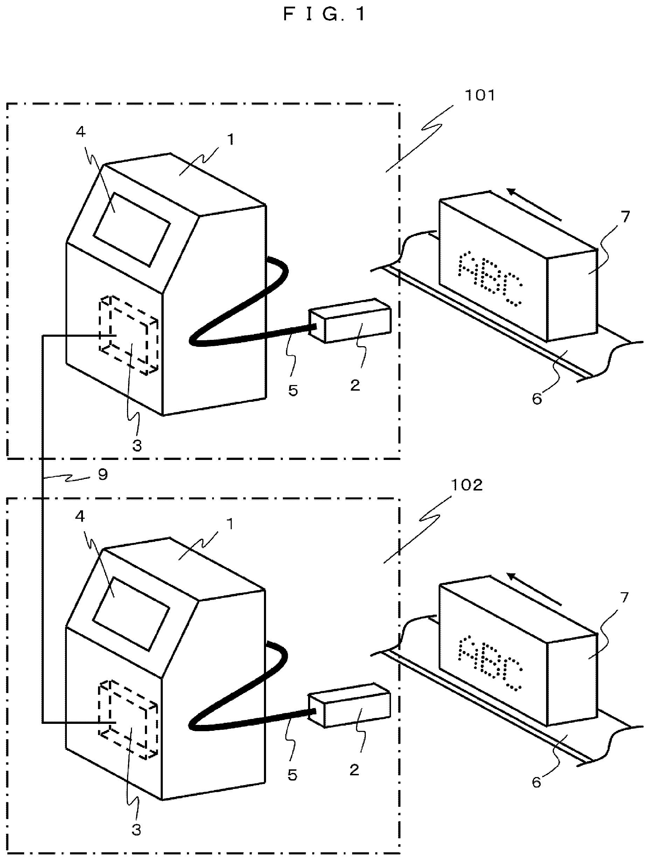

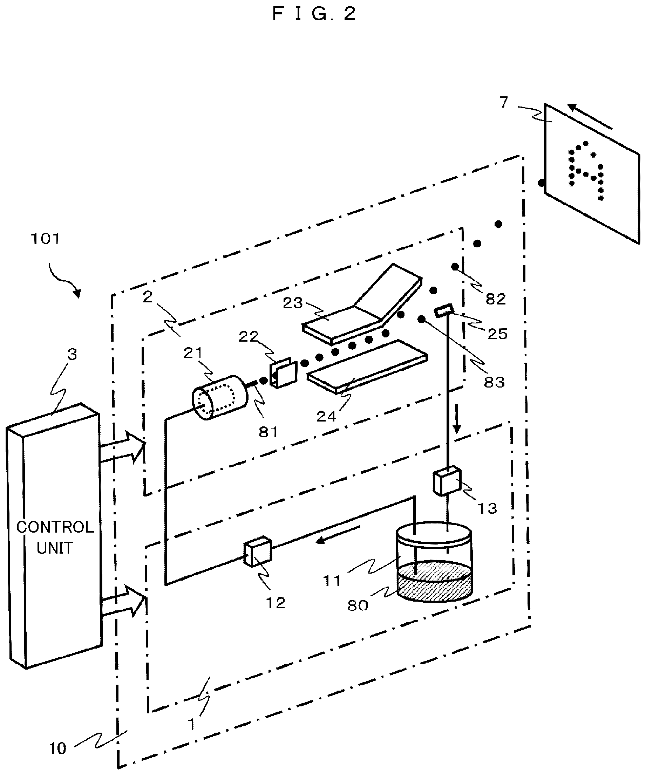

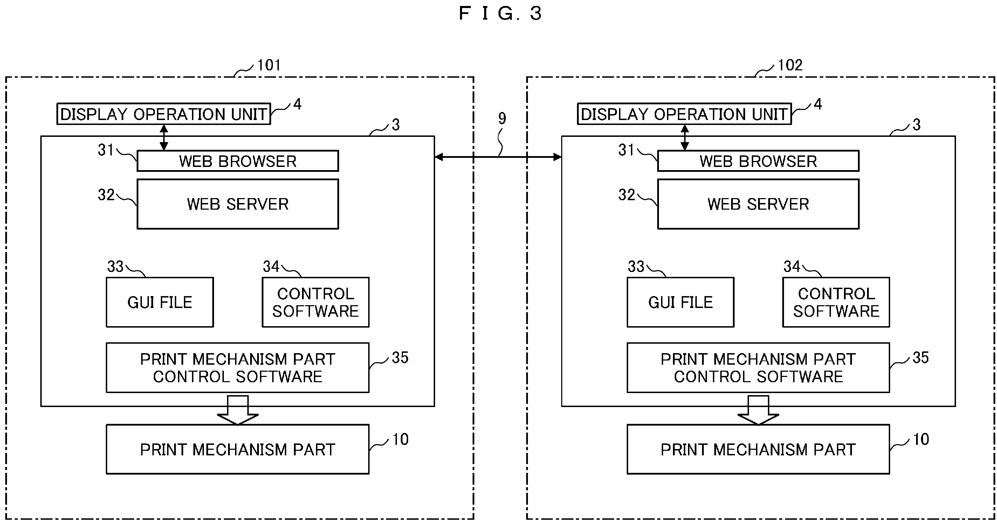

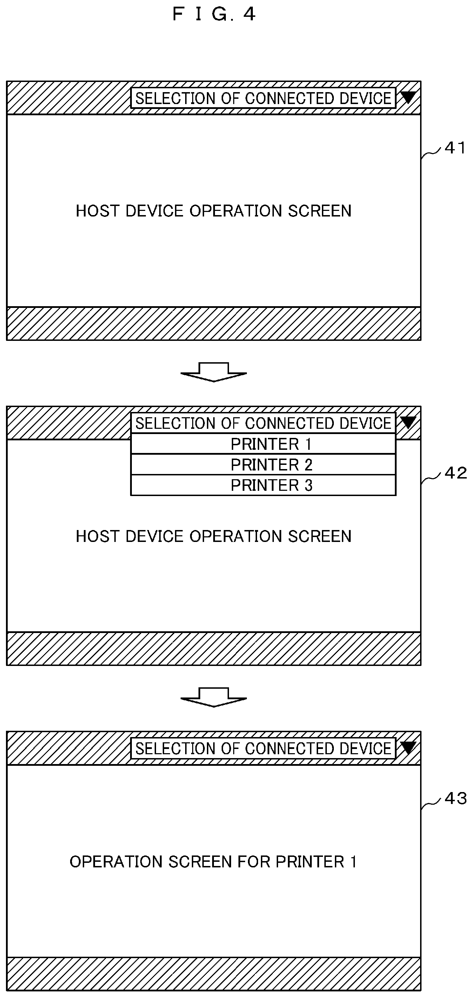

Hereinafter, Example 1 of the invention will be described with reference to Fig. 1 to Fig. 4. Note that, in this example, description will be given with reference to an inkjet printer that is often used as an industrial printer as an example. Note that, in the following description, the inkjet printer may be simply referred to as a printer. Fig. 1 is a view illustrating an external appearance of a printer system in Example 1 of the invention. Fig. 2 is a view illustrating a printing operation of the inkjet printer. Fig. 3 is a view illustrating a configuration of the printer system in Example 1 of the invention. Fig. 4 is a view illustrating an example of an initial screen of a GUI when operating the other printers.

First, an overall configuration of the printer system in Example 1 will be described with reference to Fig. 1. In Fig. 1, Example 1 shows a printer system including two printers (inkjet printers). Each of a printer 101 (inkjet printer) and a printer 102 (inkjet printer) includes a device main body 1, a print head 2, a control unit 3, a display operation unit 4, and a cable 5. That is, the printer 101 and the printer 102 are printers having the same configuration.

The device main body 1 includes a device that supplies ink that is used in printing to the print head 2 and recovers ink that is not used in printing from the print head 2. The print head 2 of each printer prints characters set in advance on an object 7 to be printed such as a product that is conveyed by a conveyor line 6.

The control unit 3 is provided to control the device main body 1 and the print head 2. In Example 1, the control unit 3 has a function of operating a printer that is another device from a printer that is a host device as to be described later.

The display operation unit 4 is a device having an operation function and a display function so that an operator can execute an operation while viewing a GUI screen, and use a touch panel or the like. Note that, an example in which the display operation unit 4 is provided on an upward portion on a front surface of the device main body 1 is illustrated, but a portable device such as a tablet may be used.

The cable 5 connects between the device main body 1 and the print head 2, and forms a flow passage of ink. In addition, an electric wire through which a control signal and the like of the control unit 3 is transmitted to the print head 2, and the like also exists inside the cable 5.

In addition, the printer 101 and the printer 102 are connected by a network line 9 such as a cable or a wireless LAN, thereby forming a communication network that enables mutual information communication between the devices.

Here, in respective drawings used in description of examples, different reference numerals (numbers) are given to clarify that a plurality of printers are provided, but constituent devices in the respective printers may have a similar configuration. Therefore, with regard to configurations in the printers illustrated in the respective drawings, the same reference numeral (number) is used for the same constituent element (a device, software, or the like). Therefore, redundant description of a constituent element that has already been described is basically omitted. This is also true of other examples to be described below.

Next, an overview of a printing operation of the inkjet printer in Example 1 will be described with reference to Fig. 2. In Fig. 2, only the printer 101 in Fig. 1 is shown, but the printer 102 also has a similar configuration. In Fig. 2, the printer 101 includes the device main body 1, the print head 2, and the control unit 3. A print mechanism part 10 represents an entire mechanism including the device main body 1 and the print head 2. Note that, in Fig. 2, the display operation unit 4 is omitted.

First, the device main body 1 includes an ink tank 11 that stores (accommodates) ink 80, an ink supply pump 12 that supplies the ink 80 to the print head 2, an ink recovery pump 13 that recovers ink collected by the gutter 25 of the print head 2 into the ink tank 11, and a path for ink circulation.

The print head 2 includes an ink nozzle 21 for making the ink supplied from the device main body 1 into droplets (ink particles). The ink nozzle 21 has a piezoelectric element and a periodic excitation voltage is applied to the piezoelectric element. According to this, the ink supplied to the ink nozzle 21 is vibrated, and after the ink is ejected (spouted) from the ink nozzle 21 as an ink column 81, continuous ink droplets are generated. The generated ink droplets travel straight at high speed.

Furthermore, the print head 2 includes a charging electrode 22, a deflection electrode (including a deflection electrode (positive electrode) 23 and a deflection electrode (negative electrode) 24), and the gutter 25. The charging electrode 22 applies a charging voltage corresponding to print contents to the flying ink droplets, thereby charging the ink droplets. The deflection electrode causes the charged ink droplets to be deflected in correspondence with a charging amount, and causes the ink droplets 82 to fly toward an object 7 to be printed. As a result, the ink droplets 82 reach and land on the object 7 to be printed. Due to landing of the ink droplets, printing is performed on the object 7 to be printed. On the other hand, ink droplets 83 which are not used for printing (ink droplets not charged by the charging electrode 22) travel straight without being deflected in the deflection electrode, and are collected (captured) by the gutter 25. The ink collected by the gutter 25 is recovered into the ink tank 11 by the ink recovery pump 13.

Next, a configuration of the printer system in Example 1 of the invention will be described with reference to Fig. 3. In Fig. 3, the printer 101 and the printer 102 are connected to each other by the network line 9, thereby forming a communication network that enables mutual information communication therebetween. Here, description will be given of a case where the printer 102 is operated from the printer 101.

The printer 101 displays a GUI screen on the display operation unit 4 by using an installed web browser 31, and an operator operates the other printer 102 by operating the display operation unit 4 while viewing the screen. The web browser 31 installed in the control unit 3 of the printer 101 accesses a web server 32. The web server 32 transmits a GUI file 33 to the web browser 31 in response to access from the browser. Examples of the GUI file include an HTML file written in a hyper text markup language (HTML). In addition, the control software 34 has a special URL, and when the URL is accessed from the web browser 31, the web server 32 transfers the access to the control software 34, and the control software 34 performs processing corresponding to the access. A print mechanism part control software 35 is software that controls the print mechanism part 10 of the printer 101 as shown in Fig. 2. The control software 34 communicates with the print mechanism part control software 35 as necessary, and issues a command related to the control of the print mechanism part 10. Note that, the control software 34 and the print mechanism part control software 35 may be implemented in different CPUs. A detailed description of the configuration of the printer 102 will be omitted.

Next, the operation of the printer 102 from the printer 101 will be described. The printer 101, which is the operating side, is provided with the same web browser 31 that displays the GUI for operating a host device. The printer 102, which is an operated side, is provided with the web server 32, the GUI file 33, the control software 34, and the print mechanism part control software 35. The roles of these in the printer 102, which is the operated side, are the same as those described for the printer 101 that is the operating side. The printer 102, which is the operated side, is also provided with the web browser 31 for displaying the GUI of a host device. Both the printers are connected by the network line 9, and the web browser 31 of the printer 101 can access the web server 32 of the printer 102 that is the operated side. In response to the access from the web browser 31 of the printer 101, the web server 32 of the printer 102, which is the operated side, transmits the GUI file 33 and transfers the access to the control software 34.

By transmitting and receiving information between the operating-side printer and the operated-side printer in this manner, the operating-side printer 101 can access the operated-side printer 102, and the print mechanism part control software 35 of the operated-side printer 102 is activated by an operation command of the display operation unit 4 of the operating-side printer 101, thereby operating the print mechanism part 10 of the printer 102. Note that, in Example 1, description has been given of a case where the printer 102 is operated from the printer 101, but the printer 102 can also drive the printer 101. In addition, although description has been given of a case where one printer operates another one printer, there is no problem although two or more operated-side printers exist.

Next, an example of an initial screen when activating the operated-side printer 102 on the display operation unit 4 of the operating-side printer 101 will be described with reference to Fig. 4. A pull-down menu for selecting a connected device is provided on a screen 41 in Fig. 4. When this is selected, a list of connected devices is displayed as shown on a screen 42. When a desired printer (operated-side printer) to be switched is selected from this device list, the screen is switched to an operation screen for the printer as shown on a screen 43.

According to Example 1 described above, it is possible to operate an operated-side printer by a GUI of an operating-side printer. In addition, since the printers 101 and 102 in this example are provided with software having a similar function in the control unit 3, the operating side and the operated side can be switched.

### <Example 2>

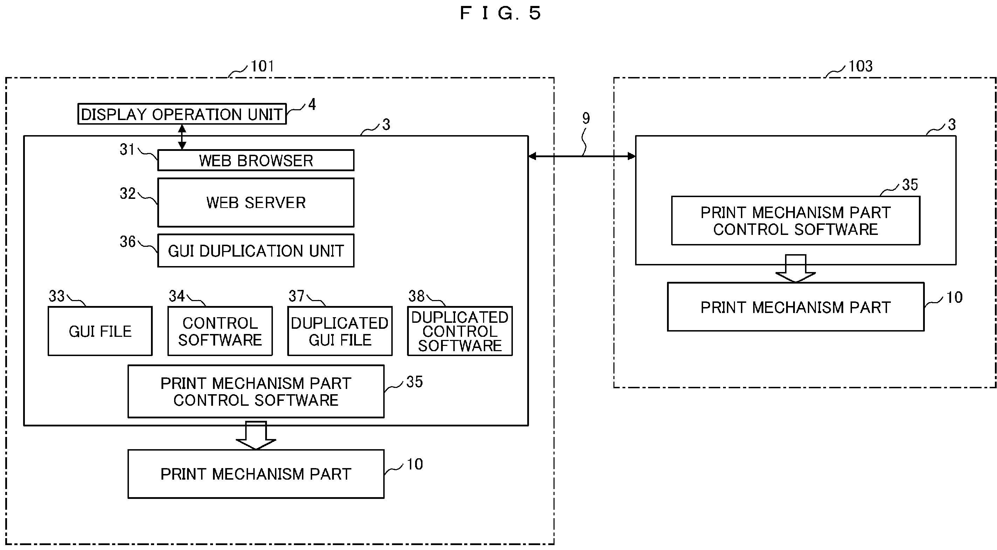

Next, Example 2 of the invention will be described with reference to Fig. 5. Example 2 has a basically similar configuration as in Example 1, but a configuration of an operated-side printer 103 is different from the configuration of the printer 102 of Example 1. Specifically, the operated-side printer 103 in Example 2 is a simplified printer that is provided with the print mechanism part control software 35 but is not provided with the other configurations. In other words, the simplified printer 103 is not provided with a GUI file or control software, and is not capable of operating independently. The operation of this printer 103 is performed by the operating-side printer 101 via a network.

As illustrated in Fig. 5, in the printer 101 that is an operating-side printer, the web browser 31 executes an access to the URL associated with the printer 103 (simplified printer) with respect to the web server 32. The web server 32 detects that the printer 103 is accessed based on the URL, and makes a request for the GUI duplication unit 36 to duplicate the GUI file and the control software. The GUI duplication unit 36 duplicates the GUI file 33 for operating a host device and the control software 34 for controlling the host device, and constructs (creates) a duplicated GUI file 37 for operating the printer 103 and the duplicated control software 38 for controlling the printer 103. The web server 32 transmits the duplicated GUI file 37 and transfers access to the duplicated control software 38 in response to the access from the web browser 31. The duplicated control software 38 accesses the print mechanism part control software 35 installed in the printer 103 via the network line 9 as necessary. According to this, the print mechanism part control software 35 of the printer 103 drives the print mechanism part 10 and executes (operates) the printing operation.

According to Example 2 of the invention, the operating-side printer can execute not only an operation of a host device but also an operation of the simplified printer. In this case, the simplified printer can be made inexpensive since the functions of the operating-side printer are not provided, and thus a reduction in the cost of the entire printer system is realized.

### <Example 3>

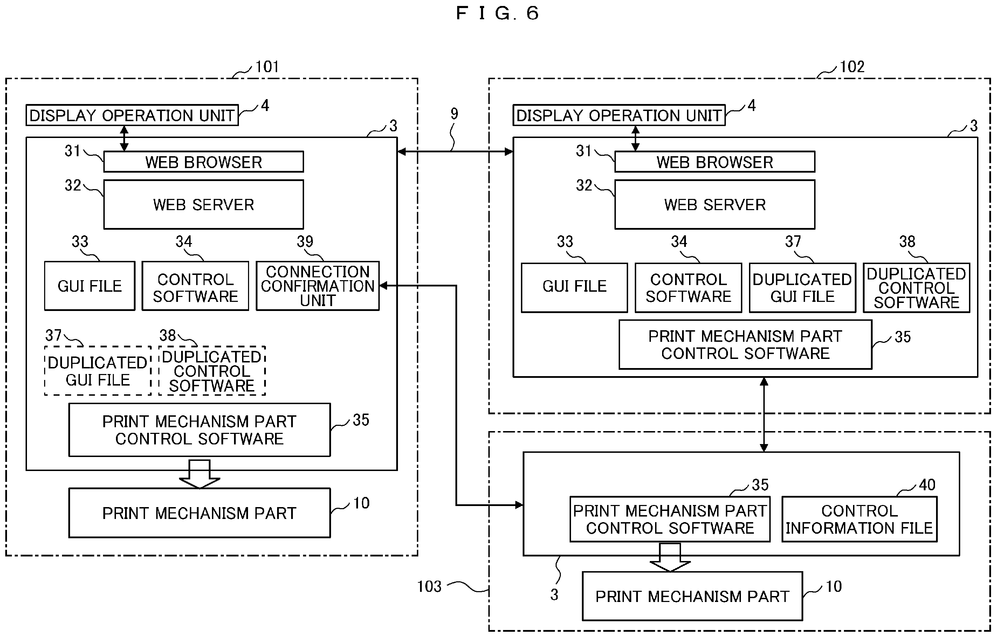

Next, a printer system according to Example 3 of the invention will be described with reference to Fig. 6. Example 3 illustrates a system in which the printer 101 as an operating-side printer operates the printer 103 in a case where the simplified printer 103 as shown in Example 2 is already being operated by the other printer 102. In other words, this is a case where the printer 101 is switched to operate the simplified printer 103 that is already being operated by another device. The switching of operation is performed as follows. Note that, each component within the printer has already been described, and thus description thereof will be omitted here.

First, the web browser 31 of the printer 101 executes an access to the printer 103 with respect to the web server 32. The web server 32 makes a request for a connection confirmation unit 39 to confirm information of a connection destination indicated by URL. According to this, the connection confirmation unit 39 makes a request for the print mechanism part control software 35 of the printer 103 to transmit device information. The print mechanism part control software 35 retains a control information file 40 and provides information based on the control information file 40. The control information file 40 retains a true/false value as to whether a host device is controlled by another device and URL information of the another device that controls the host device in a case where the host device is controlled. In this case, since the printer 103 is controlled from the other printer 102, the control information file 40 retains true for the true/false value as to whether the printer is controlled and a URL of the printer 102 as a URL of the another device. Since the printer 102 operates the printer 103, the printer 102 retains the duplicated GUI file 37 and the duplicated control software 38, which are copies of the host device, with respect to the printer 103, as described in Example 2. Here, the connection confirmation unit 39 of the printer 101 transmits the URL of the printer 102, which is a connection destination, to the web server 32 on the basis of the information acquired from the print mechanism part control software 35 of the printer 103. The web server 32 transfers the access of the web browser 31 to the web server 32 of the printer 102 on the basis of the acquired URL. In response to the access, the web server 32 of the printer 102 transmits the duplicated GUI file 37 and the duplicated control software 38 for operating the printer 103, which has been used to operate the printer 103, to the printer 101. According to this, the printer 101 retains the duplicated GUI file 37 and the duplicated control software 38. As a result, the printer 101 can execute the operation of the printer 103. Note that, in this case, instead of the case where the printer 101 is provided with the duplicated GUI file 37 and the duplicated control software 38 from the printer 102, the printer 101 may generate the duplicated GUI file 37 and the duplicated control software 38 as in Example 2.

According to Example 3 of the invention, even in a case where the other printer is already operating a simplified printer, a host printer can execute an operation of the simplified printer.

### <Example 4>

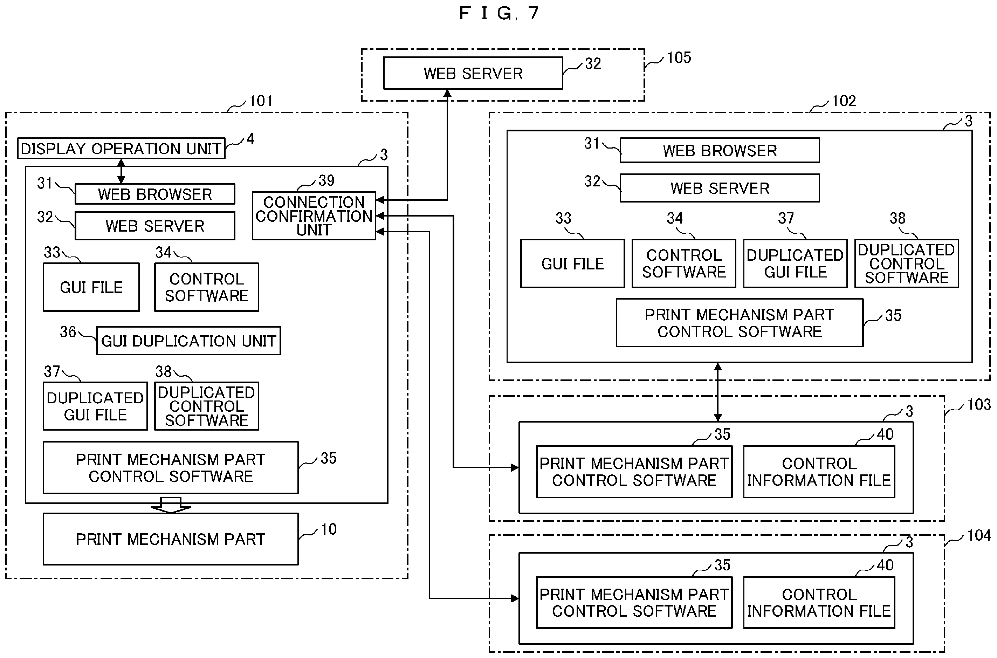

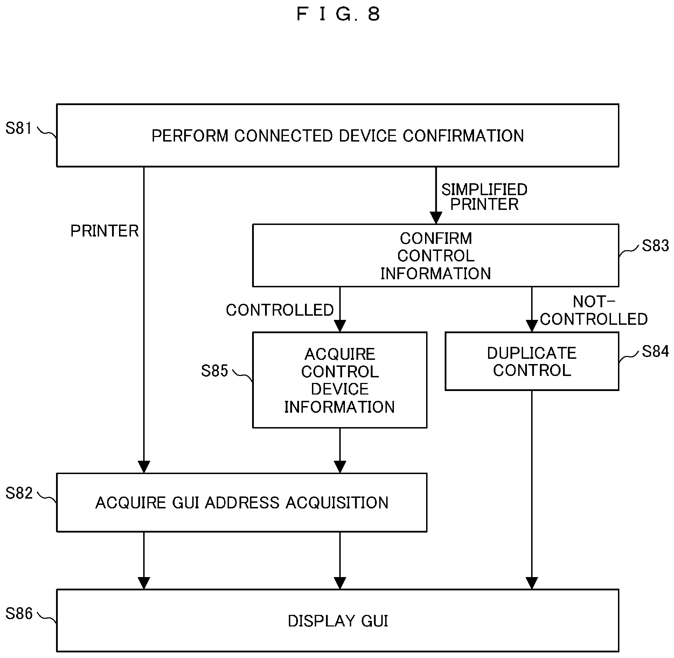

Next, Example 4 of the invention will be described with reference to Fig. 7 and Fig. 8. Fig. 7 is a view illustrating a configuration of a printer system in Example 4. Fig. 8 is a view illustrating a flow of connected device confirmation in Example 4.

As is clear from the above-described examples, there are a number of cases where a printer accesses another printer to perform an operation, and there is a difference depending on a printer to be accessed and a state of the printer. In Example 4, the difference when accessing an operated-side printer is absorbed, and it is possible to access the other printer without being aware of the difference on an operator side. In the example illustrated in Fig. 7, description will be made on the assumption that an operating-side printer is printer 101.

The web browser 31 of the printer 101 issues an access to a URL of a desired operated-side device with respect to the web server 32. In a case where an object to be accessed is an external device, the web server 32 issues a connection confirmation request to the connection confirmation unit 39. The connection confirmation unit 39 performs a connected device confirmation for a URL of an access destination.

A flow of the connection confirmation is shown in Fig. 8. First, a connected device confirmation is performed in connected device confirmation S81. In a case where a connection destination is the printer 105, connection destination information of GUI is acquired from the web server 32 of the printer 105 in GUI connection information acquisition S82. In a case where the connection destination is a simplified printer, control information is confirmed in control information confirmation S83. In a case where the connection destination is a simplified printer 104 that is not being operated by the other device, true/false value data as to whether or not a printer is being controlled is false in the control information file 40 acquired from the print mechanism part control software 35 of the printer 104, and it can be seen that the simplified printer is not being controlled by the other device. In this case, a GUI duplication request is issued to the GUI duplication unit 36 of the printer 101 in control duplication 84.

According to this, the GUI duplication unit 36 of the printer 101 duplicates the GUI file 33 and the control software 34 of the host device, and creates the duplicated GUI file 37 and the duplicated control software 38.

The connection confirmation unit 39 of the printer 101 transmits the URI of the duplicated GUI file 37 to the web server 32 of the printer 105. In a case where the connection destination is the simplified printer 103 that is being controlled by the other printer 102, the true/false value data as to whether or not a printer is being controlled is true in the control information file 40 acquired from the print mechanism part control software 35, and it can be seen that the printer is being controlled by the other device (printer 102). A value of a URL of the duplicated GUI file 37 of the printer 102 that is being controlled is acquired from the control information file 40 of the printer 103 in control device information acquisition S85, and is transmitted to the web server 32 of the printer 101. In any case, the web server 32 of the printer 101 is finally able to acquire the URL of the GUI, and can display the GUI on the display operation unit 4 of the printer 101 in GUI display S86.

This method allows an operator to perform an operation without being aware of the difference between a device to be connected and an operating-side printer. An example of a GUI for the operator in this case is as shown in Fig. **4****.** That is, the initial screen 41 in Fig. 4 is provided with a pull-down menu for selecting a device to be connected. A device list of a printer to be operated is displayed in the pull-down menu as shown on the screen 42. When the desired printer is selected from the device list, the screen switches to an operation screen for the printer as shown on the screen 43. On the screen, each printer shown in the pull-down menu may be the same device as the operating printer or may be a simplified printer, but the operator does not need to be aware of the difference.

As described above, according to Example 4 of the invention, an operator can smoothly operate a printer to be connected (operated) without being aware of whether the printer to be connected (operated) is a normal printer or a simplified printer.

### <Example 5>

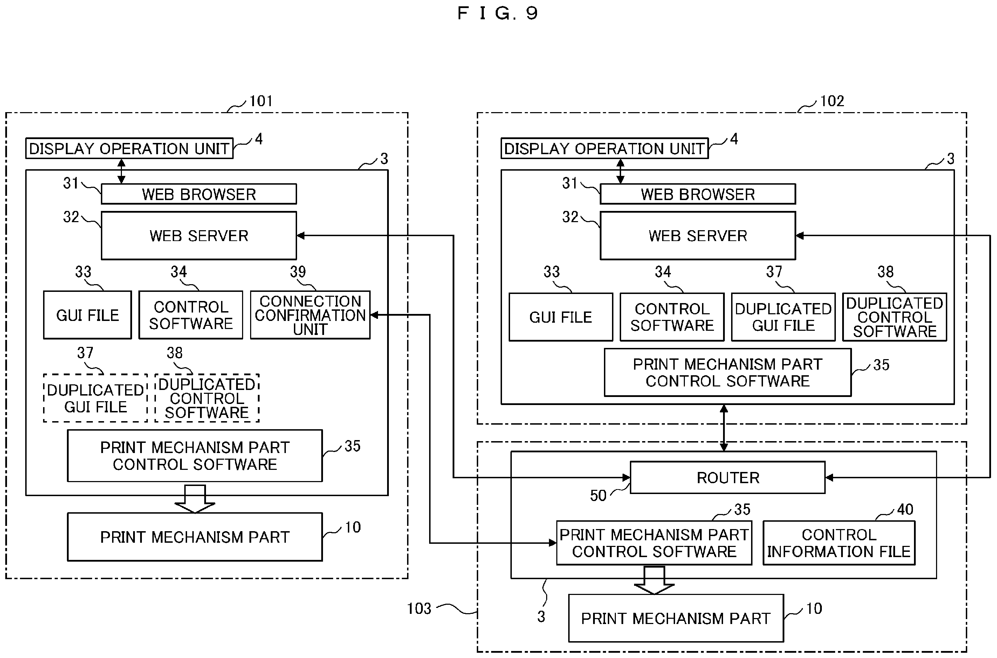

Next, Example 5 of the invention will be described with reference to Fig. 9. Fig. 9 is a view illustrating a configuration of a printer system according to Example 5 of the invention.

Example 5 enables an operating-side printer to display the GUI even in a case where the GUI exists on a different network. That is, as in the example described in Example 3 (Fig. 6), in a case of accessing the simplified printer 103 that is being controlled by the other printer 102, the other printer 102 may exist on a different network, and thus the printer 102 may not be directly accessed from a host device (printer 101). Even in such a case, a configuration in which connection is possible is shown in Fig. 9. Even in this example, description will be made on the assumption that the operating-side printer that operates the other printer is the printer 101.

As in Example 3 illustrated in Fig. 6, in Example 5 illustrated in Fig. 9, in a case where the printer 102 is operating the simplified printer 103, the printer 101 switches to operate the simplified printer 103. In Example 5, since the host printer (printer 101) and the other printer 102 exist on different networks, the operating-side printer 101 cannot directly access the other printer 102.

In this case, the operation switching is performed as follows. First, the web browser 31 of the printer 101 accesses the web server 32, and the web server 32 makes a request for the connection confirmation unit 39 to confirm connection. The connection confirmation unit 39 accesses the print mechanism part control software 35 of the printer 103. In this case, the control information file 40 of the printer 103 stores a URL of a router 50 provided in the host device instead of a URL of the printer 102. The connection confirmation unit 39 of the printer 101 receives the URL from the printer 103 and transmits the URL to the web server 32. The web server 32 that has received the URL accesses the router 50 of the printer 103. The router 50 knows the URL of the web server 32 of the printer 102 that controls the host device, and transfers the access transmitted thereto. According to this, the web server 32 of the printer 101 can access the web server 32 of another network via the router 50.

In this way, the printer 101 can obtain the duplicated GUI file 37 and the duplicated control software 38 of the printer 102 that exists on a network different from that of the printer 101 via the router 50. Then, the printer 101 can operate the printer 103 by using the duplicated GUI file 37 and the duplicated control software 38 which are obtained.

According to Example 5 of the invention described above, it is possible to obtain the duplicated GUI file 37 and the duplicated control software 38 of a printer connected to another network, and to control a printer that is operated by a host device.

### <Example 6>

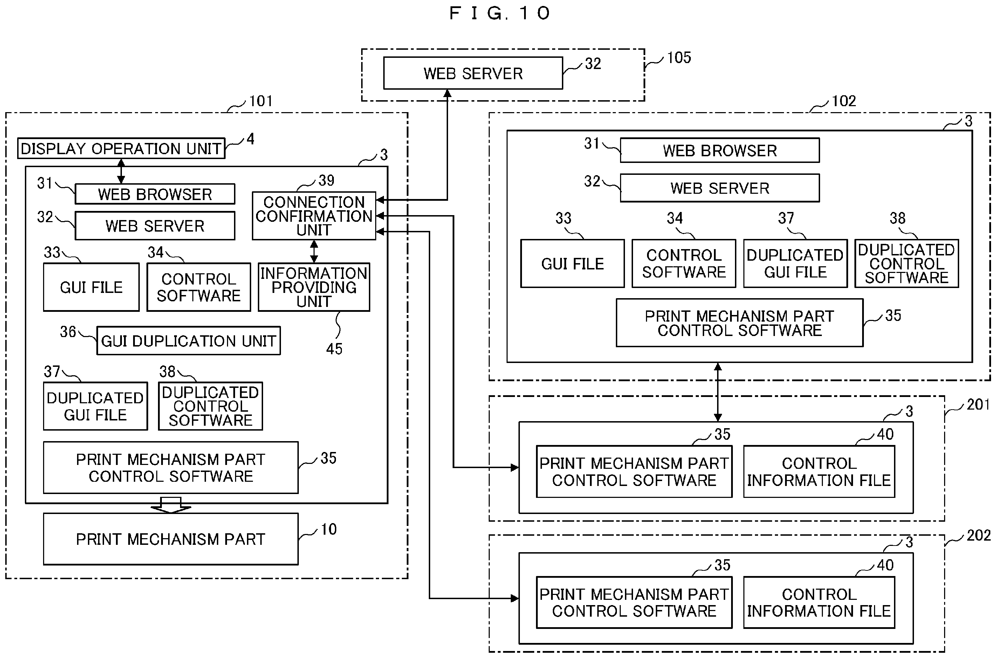

Next, Example 6 of the invention will be described with reference to Fig. 10. Fig. 10 is a view illustrating a configuration of a printer system in Example 6 of the invention. Example 6 has a basically similar configuration as in Example 4 (the printer system illustrated in Fig. 7), and the basic operation is similar as in Example 4.

Example 6 is different from Example 4 in that a connected device operated by the printer 101 is not a printer, but print inspection devices 201 and 202 installed as a part of the printer system. The print inspection devices 201 and 202 are provided to set print information and inspect whether a printed state is normal or not. Here, description will be made on the assumption that the print inspection devices 201 and 202 have a similar software configuration as in the simplified printer. The printer 101 includes a web server 32, a host device GUI file 33, and the control software 34. A method of displaying the GUI is similar as in Example 1, and thus description thereof will be omitted here.

In Example 6, information of an information providing unit 45 of the printer 101 that is a host device is provided to the print inspection devices 201 and 202 which are devices to be connected by the connection confirmation unit 39.

This configuration is used, for example, to provide character information that is being currently printed to the print inspection devices 201 and 202 so as to eliminate the need to set print information for inspection in the print inspection devices 201 and 202. On the other hand, with regard to a device that is a connection destination (print inspection device 201 or 202), in a case where the print inspection device 201 is being operated by the other printer 102, it is assumed that the print information for inspection has already been provided from the other printer 102, and thus no information is provided. In this way, the information providing unit 45 changes the provided information in correspondence with the connection destination information from the connection confirmation unit 39.

According to Example 6 of the invention described above, it is possible to operate a device to be connected other than a printer (in this example, the print inspection device) from the printer 101 in a similar manner as in the operation of other printers.

### REFERENCE SIGNS LIST

- 1: Device main body
- 2: Print head
- 3: Control unit
- 4: Display operation unit
- 5: Cable
- 6: Conveyor line
- 7: Object to be printed
- 9: Network line
- 10: Print mechanism part
- 11: Ink tank
- 12: Pump
- 13: Pump
- 21: Ink nozzle
- 22: Charging electrode
- 23: Deflection electrode (positive electrode)
- 24: Deflection electrode (negative electrode)
- 25: Gutter
- 31: Web browser
- 32: Web server
- 33: GUI file
- 34: Control software
- 35: Print mechanism part control software
- 36: GUI duplication unit
- 37: Duplicated GUI file
- 38: Duplicated control software
- 39: Connection confirmation unit
- 40: Control information file
- 45: Information providing unit
- 80: Ink
- 81: Ink column
- 82: Ink droplets
- 83: Ink droplets
- 101: Printer
- 102: Printer
- 103: Printer
- 104: Printer
- 105: Printer
- 201: Print inspection device
- 202: Print inspection device

## Claims

1. A printer system comprising:
a plurality of printers provided with a print mechanism part control software that controls a printing operation unit by a GUI displayed on a display operation unit, the plurality of printers being connected to a network,
wherein at least one printer among the plurality of printers is an operating-side printer that operates the other printers,
the operating-side printer is provided with a GUI file for a host device, and control software that gives a command to the print mechanism part control software,
the operating-side printer constructs a GUI file and control software for operating an operated-side printer, and
the operated-side printer is operated on the basis of the constructed GUI file and the control software of the operated-side printer.

2. The printer system according to claim 1,
wherein in a case where the operated-side printer is provided with the GUI file and the control software, the GUI file and the control software which are constructed by the operating-side printer to operate the operated-side printer are constructed by taking in the GUI file and the control software of the operated-side printer via the network.

3. The printer system according to claim 1,
wherein in a case where the operated-side printer is not provided with the GUI file and the control software and is not operated by the other printer, the GUI file and the control software which are constructed by the operating-side printer to operate the operated-side printer are constructed by duplicating the GUI file and the control software of the operating-side printer.

4. The printer system according to claim 1,
wherein in a case where the operated-side printer is not provided with the GUI file and the control software and is operated by another printer, the GUI file and the control software which are constructed by the operating-side printer to operate the operated-side printer are constructed by acquiring the GUI file and the control software of the operated-side printer which are provided in the another printer.

5. The printer system according to claim 1,
wherein the operated-side printer is a simplified printer provided with only the print mechanism part control software, and
in a case where the simplified printer is not operated by another printer, the operating-side printer duplicates the GUI file of the host device to duplicate a GUI file for the simplified printer, and operates the simplified printer by using the duplicated GUI file.

6. The printer system according to claim 1,
wherein the operated-side printer has a function of transmitting whether or not the operated-side printer has already been operated by the other printer to the operating-side printer through access from the operating-side printer.

7. The printer system according to claim 1, further comprising:
a print inspection device configured to inspect a printed state,
wherein the operating-side printer duplicates the GUI file and the control software of the host device to construct a GUI file and control software for operating the print inspection device, and
the print inspection device is operated by using the constructed GUI file and the control software.

8. A control method for a printer system including a plurality of printers provided with a print mechanism part control software that controls a printing operation unit by a GUI displayed on a display operation unit, the plurality of printers being connected to a network,
wherein an operating-side printer that operates another printer is provided with a GUI file for a host device, and control software that gives a command to the print mechanism part control software,
a GUI file and control software for operating an operated-side printer are constructed, and
the operated-side printer is operated on the basis of the constructed GUI file and the control software of the operated-side printer.

9. The control method for a printer system according to claim 8,
wherein in a case where the operated-side printer is provided with the GUI file and the control software, the GUI file and the control software which are constructed by the operating-side printer to operate the operated-side printer are constructed by taking in the GUI file and the control software of the operated-side printer via the network.

10. The control method for a printer system according to claim 8,
wherein in a case where the operated-side printer is not provided with the GUI file and the control software and is not operated by the other printer, the GUI file and the control software which are constructed by the operating-side printer to operate the operated-side printer are constructed by duplicating the GUI file and the control software of the operating-side printer.

11. The control method for a printer system according to claim 8,
wherein in a case where the operated-side printer is not provided with the GUI file and the control software and is operated by another printer, the GUI file and the control software which are constructed by the operating-side printer to operate the operated-side printer are constructed by acquiring the GUI file and the control software of the operated-side printer which are provided in the another printer.

12. The control method for a printer system according to claim 8,
wherein a simplified printer provided with only the print mechanism part control software is disposed as the operated-side printer, and
in a case where the simplified printer is not operated by another printer, the operating-side printer duplicates the GUI file of the host device to duplicate a GUI file for the simplified printer, and operates the simplified printer by using the duplicated GUI file.

13. The control method for a printer system according to claim 8,
wherein the operated-side printer transmits whether or not the operated-side printer has already been operated by the other printer to the operating-side printer through access from the operating-side printer.

14. The control method for a printer system according to claim 8,
wherein the printer system further includes a print inspection device configured to inspect a printed state,
the operating-side printer duplicates the GUI file and the control software of the host device to construct a GUI file and the control software for operating the print inspection device, and
the print inspection device is operated by using the constructed GUI file and control software.
